# EUROPÄISCHE PATENTSCHRIFT

(11) **EP 3 814 266 B1**
(45) Veröffentlichungstag und Bekanntmachung des Hinweises auf die Patenterteilung: **29.10.2025**
(21) Anmeldenummer: 19732379.3
(22) Anmeldetag: 26.06.2019
(51) Int. Cl.: B66B 7/04

(54) **GLEITFÜHRUNGSSCHUH FÜR EINEN AUFZUG UND VERFAHREN ZUR HERSTELLUNG EINES GLEITFÜHRUNGSSCHUHS**
GLIDE SHOE FOR AN ELEVATOR AND METHOD FOR THE PRODUCTION OF SAME
PATIN DE GUIDAGE COULISSANT POUR UN ASCENSEUR ET PROCÉDÉ DE FABRICATION D'UN CE PATIN DE GUIDAGE COULISSANT

(30) Priorität: 28.06.2018 EP 18180422
(43) Veröffentlichungstag der Anmeldung: 05.05.2021
(73) Patentinhaber: INVENTIO AG, 6052 Hergiswil (CH)
(72) Erfinder: ZAPF, Volker, 6012 Obernau (CH)
(74) Vertreter: Inventio AG
(86) Internationale Anmeldenummer: PCT/EP2019/066967
(87) Internationale Veröffentlichungsnummer: WO 2020/002409

(56) Entgegenhaltungen:
- WO-A1-2018/086520
- DE-U1- 8 521 604
- FI-B- 125 670
- JP-A- 2001 261 259

## Beschreibung

Die Erfindung betrifft einen Gleitführungsschuh für einen Aufzug zur Personen- oder Warenbeförderung gemäss dem Oberbegriff von Anspruch 1. Weiterhin betrifft die Erfindung ein Verfahren zur Herstellung eines Gleitführungsschuhs für einen Aufzug.

Zum Führen von Aufzugskabinen werden häufig Gleitführungsschuhe eingesetzt. Aufzugsanlagen in Gebäuden weisen einen in der Regel vertikalen Aufzugsschacht auf, in dem an einander gegenüberliegenden Schachtwänden je eine Führungsschiene angeordnet ist. An der Aufzugskabine angeordnete Gleitführungsschuhe weisen der Führungsschiene zugewandte Gleitflächen auf, die mit geringem Spiel entlang der Führungsschiene gleiten. Bekannt und gebräuchlich sind Gleitführungsschuhe, die Einlagen mit Gleitflächen aufweisen, wobei die Einlagen häufig als im Querschnitt U-förmige Profile ausgestaltet sind. Da die Einlagen sich im Laufe der Zeit abnützen, müssen verbrauchte oder alte Gleiteinlagen ausgewechselt werden. Aus der DE 203 15 915 U1 ist beispielsweise ein Gleitführungsschuh mit einem Führungsschuhgehäuse und einer im Führungsschuhgehäuse eingesetzten Einlage bekannt geworden, bei der die Einlage zweiteilig ausgestaltet ist. Die Einlage besteht aus einem Trägerelement und einem Gleitelement. Das Gleitelement lässt sich auswechseln, wobei allerdings nach erstmaliger Inbetriebnahme des Aufzugs der ganze Gleitführungsschuh zuerst ausgebaut werden muss. In der Praxis hat sich gezeigt, dass, selbst nachdem der Gleitführungsschuh von der Kabine demontiert wurde, das in eine zur Vorderseite hin offenen, taschenartige Vertiefung im Trägerelement eingesetzte Gleitelement nur schwer vom Trägerelement entfernt werden kann und auch das Einsetzen schwierig sein kann. Mit speziellen Gleitführungsschuhen, wie sie etwa aus der FI 125670 B,

EP 1 880 968 A1 oder EP 2 771 268 A1 bekannt geworden, ist es möglich, dass die Einlage ganz oder teilweise aus dem Gleitführungsschuh durch seitliches Herausziehen in Längsrichtung entlang der Führungsschienen entfernbar sind, ohne dass der Führungsschuh ganz demontiert werden muss. Die bekannten Gleitführungsschuhe sind vergleichsweise teuer und aufwendig in der Herstellung. Im Dokument JP 2001 261259 A, das Führungsschuhgehäuse aus einem nichtmetallischen Material besteht, eben keine feste, sondern eine lösbare Verbindung zwischen Gehäuse und Einlage vorgesehen ist. Die Einlage ist zum Austauschen einfach aus dem Führungsschuhgehäuse entfernt werden kann.

Es ist deshalb eine Aufgabe der vorliegenden Erfindung, die Nachteile des Bekannten zu vermeiden und insbesondere einen Gleitführungsschuh der eingangs genannten Art zu schaffen, der einfach und kostengünstig herstellbar ist.

Erfindungsgemäss wird diese Aufgabe mit dem Gleitführungsschuh mit den Merkmalen des Anspruchs 1 gelöst. Der Gleitführungsschuh für einen Aufzug zur Personen- oder Warenbeförderung umfasst ein Führungsschuhgehäuse und ein im Führungsschuhgehäuse angeordnetes Gleitelement zum Führen der Aufzugskabine entlang einer Führungsschiene oder ein im Führungsschuhgehäuse angeordnetes Gleitelement zum Führen eines Gegengewichts entlang einer Führungsschiene. Dadurch, dass das Führungsschuhgehäuse und das Gleitelement ein Verbund-Bauteil bilden, wird ein kompakter Einweg-Gleitführungsschuh geschaffen. Unter Verbundbauteil wird vorliegend ein aus mehreren Komponenten oder Elementen aufgebautes Bauteil verstanden, bei dem die Komponenten oder Elemente dauerhaft miteinander und in der Regel ohne Verwendung von mechanischen Befestigungselementen (wie z.B. Schrauben oder andere lösbare Verbindungsmitteln) zum Zusammenhalten oder Sichern der Komponenten verbunden sind. Die so miteinander verbundenen Komponenten oder Elemente bilden eine Einheit, bei dem ein Separieren oder ein Lösen einzelner Komponenten Elemente aus der integralen Einheit ordnungsgemäss nicht vorgesehen ist. Das Verbund-Bauteil kann einstückig oder mehrstückig ausgebildet sein.

Durch diese Ausgestaltung ergeben sich eine Reihe von Vorteilen. So ermöglicht die erfindungsgemässe Ausgestaltung des Gleitführungsschuhs, dass der Gleitführungsschuh einfach und kostengünstig hergestellt werden kann. Insbesondere die massenweise Fertigung des Gleitführungsschuhs wird erheblich vereinfacht. Da keine mechanischen Befestigungselemente zum Zusammenhalten oder Sichern der Komponenten notwendig sind, lässt sich der Gleitführungsschuh in wenigen Arbeitsschritten fertigen. Es geht ohne aufwendiges Zusammenbauen; der Montageaufwand zum Zusammenbau einzelner Elemente oder Komponenten entfällt. Da das Führungsschuhgehäuse und das Gleitelement sicher und unverlierbar miteinander verbunden sind, ergeben sich auch Vorteile im Hinblick auf die Handhabung des Gleitführungsschuhs. Der Aufwand zum Montieren des Gleitführungsschuhs an die Aufzugskabine oder an das Gegengewicht sowie zur Demontage von der Aufzugskabine oder vom Gegengewicht wird stark reduziert.

Das Führungsschuhgehäuse dient einerseits zum Halten des Gleitelements und andererseits zum Verbinden an die Aufzugskabine. Für die Verbindung mit der Aufzugskabine kann das Führungsschuhgehäuse zum Beispiel Öffnungen aufweisen, durch die Befestigungsschrauben durchführbar sind, mit welchen der Gleitführungsschuh über das Führungsschuhgehäuse an die Kabine oder an eine Konsole als Zwischenglied zum Erstellen einer Verbindung zur Kabine anschraubbar ist. Das Gleitelement ist dasjenige Element, das für die Führung der Aufzugskabine entlang einer sich in Fahrt- bzw. Längsrichtung erstreckenden Führungsschiene dient. Hierzu kann das Gleitelement Gleitflächen oder - bereiche aufweisen, die, wenn der Gleitführungsschuh im Aufzug installiert und einsatzbereit ist, bei einer Kabinenfahrt mit geringem Spiel entlang der Führungsschiene gleiten.

Das Führungsschuhgehäuse und das Gleitelement sind aus unterschiedlichen Kunststoffen gefertigt. Führungsschuhgehäuse und Gleitelement aus Kunststoffen ergeben ein vorteilhaftes ein- oder mehrstückiges Verbund-Bauteil- Dieses Verbund-Bauteil eignet sich besonders gut als Einweg- oder Wegwerf-Bauteil. Nach Erreichen der Lebensdauer kann es schnell und unkompliziert entsorgt werden können. Der Kunststoff-Gleitführungsschuh lässt sich besonders einfach herstellen und ist in grossen Mengen und kostengünstig verfügbar; die entsprechenden Kunststoffe können abhängig von den geforderten Eigenschaften und Anforderungen ausgewählt werden.

Zum Optimieren des Fahrkomforts kann es vorteilhaft sein, wenn zwischen Führungsschuhgehäuse und Gleitelement ein Dämpfelement angeordnet ist. Das Dämpfelement kann durch entsprechende Materialauswahl, strukturellen Aufbau oder Formgebung Dämpfungseigenschaften aufweisen, wodurch eine vibrations- und geräuscharme Fahrt der Kabine gewährleistet werden kann.

Der Kunststoff für das Führungsschuhgehäuse ist vorzugsweise ein hochfester Kunststoff, beispielsweise ein Thermoplast oder ein Duroplast. Das Führungsschuhgehäuse kann z.B. aus Polyethylen (PI), Polypropylen (PP), Polyamid (PA), Polyimid (PI), Polystyrol (PS), Polyurethan (PUR) oder Polyoxymethylen (POM) gefertigt sein. Für Kunststoffe sind Abkürzungen allgemein bekannt und gebräuchlich, weshalb der Einfachheit halber nachfolgend Abkürzungen oder Kurzzeichen für spezifische Kunststoffe verwendet werden. Auch PES, PEEK oder TPEs kommen für das Führungsschuhgehäuse in Frage. Besonders vorteilhaft kann es sein, wenn ein faserverstärkter Kunststoff für das Führungsschuhgehäuse verwendet wird. Der Kunststoff für das Führungsschuhgehäuse kann beispielsweise Glasfasern, Kohlenstofffasern und/oder Aramidfasern aufweisen.

Für das Dämpfelement ist zum Beispiel ein elastischer Kunststoff, insbesondere ein thermoplastisches Elastomer (TPE) oder ein Kunststoff aus vernetzten Elastomeren, verwendbar. Das Dämpfelement kann beispielsweise aus SBR, TUR, EPDM, NBR, NR gefertigt sein. Das Dämpfelement könnte aus einer Elastomerlegierung bestehen. Durch Anpassen von Mischungsverhältnissen und Zugabe von Zuschlagmitteln lassen sich Dämpfelemente mit dem gewünschten Dämpfverhalten erzielen.

Das Gleitelement ist vorzugsweise aus einem Kunststoff gefertigt, der sich im Hinblick auf die Gleitfunktion durch einen geringen Reibungskoeffizienten auszeichnet. Neben guten Gleiteigenschaften soll der Kunststoff für das Gleitelement vorzugsweise auch eine ausreichend hohe Festigkeit, Steifigkeit und Härte aufweisen. Das Gleitelement kann beispielhaft aus POM oder UHMW-PE gefertigt sein. Für einen sicheren und einwandfreien Betrieb des Aufzugs werden in der Regel die Führungsschienen mit Öl oder einem anderen Schmiermittel benetzt. Beim Einsatz von Gleitführungsschuhen mit Gleitelementen aus POM oder UHMW-PE könnte dank der guten Trockenlaufeigenschaften dieser Kunststoffe bei Bedarf sogar auf eine Schmierung der Führungsschienen verzichtet werden oder man könnte in Sondersituationen wenigstens temporär ohne Schmierung auskommen. Gleitelemente mit besonders guten Gleiteigenschaften gewährleisten auch ein ruckfreies Anfahren der Aufzugskabine und einen nahezu geräuschfreien Lauf während einer Kabinenfahrt.

Die Verwendung und die Kombination solcher Kunststoffe hat auch den Vorteil, dass sie den materiellen Anforderungen der Funktionen der jeweiligen Komponenten (Führungsschuhgehäuse, Dämpfelement, Gleitelement) trotz der geringen Kosten standhalten und damit die Lebensdauer des Gleitführungsschuhs erhöhen.

Zum Beispiel könnte der Kunststoff für das Führungsschuhgehäuse POM, vorzugsweise faserverstärkter POM, für das Dämpfelement TPE und für das Gleitelement POM sein. Für das Führungsschuhgehäuse und das Gleitelement können demnach gleichartige Kunststoffe (i.c. POM) verwendet werden, wobei die jeweiligen Kunststoffe durch Wahl des Herstellungsverfahrens und Polymerisationsgrades sowie eventuellem Hinzufügen von Zusatzstoffen an die vorgesehene Funktion angepasst werden.

Erfindungsgemäss ist der Gleitführungsschuh ein durch ein 2K- oder 3K-Spritzgussverfahren hergestelltes Verbund-Bauteil. Der durch das erwähnte 2K-Spritzgussverfahren hergestellte Gleitführungsschuh besteht aus Führungsschuhgehäuse und Gleitelement. Das Führungsschuhgehäuse kann also in diesem Fall direkt mit dem Gleitelement verbunden sein. Der durch das 3K-Spritzgussverfahren hergestellte Gleitführungsschuh betrifft den aus drei Komponenten aufgebauten Gleitführungsschuh bestehend aus Führungsschuhgehäuse, Gleitelement und Dämpfelement.

Ein Vorteil des Gleitführungsschuhs, der ein durch ein 2K- oder 3K-Spritzgussverfahren hergestelltes Verbund-Bauteil ist, besteht etwa darin, dass im Vergleich zu konventionellen Gleitführungsschuhen, die aus separaten jeweils vorfabrizierten Komponenten aufgebaut sind und zum Zusammenbau des Gleitführungsschuhs einen vergleichsweise grossen Montageaufwand erfordern, kein besonderer Montageaufwand erforderlich ist. Ein solcher Gleitführungsschuh lässt sich billig, in gleichbleibender Qualität massenweise fertigen. Die hierzu verwendeten Spritzgussmaschinen eignen sich für eine besonders effiziente automatisierte Fertigung. Betriebsparameter können optimal eingestellt werden. Auf zusätzliche Verbindungsmittel mit denen die einzelnen Komponenten miteinander verbunden werden müssen, kann verzichtet werden.

Das Führungsschuhgehäuse, das Gleitelement und gegebenenfalls das Dämpfelement können kraftschlüssig, formschlüssig und/oder stoffschlüssig miteinander verbunden sind. Diese Verbindungsarten können einfach sicherstellen, dass keine zusätzlichen mechanische Verbindungselemente wie etwa Schrauben erforderlich sind.

Das Führungsschuhgehäuse, das Gleitelement und gegebenenfalls das Dämpfelement können über ein chemisches Haftmittel oder thermisch miteinander verbunden sein.

Wenn zum Beispiel der Gleitführungsschuh ein durch ein 2K- oder 3K-Spritzgussverfahren hergestelltes Verbund-Bauteil ist, kann es, je nach verwendeten Kunststoffen für die einzelnen Komponenten (Führungsschuhgehäuse, Gleitelement, Dämpfelement), aber schwierig sein, eine ausreichend starke Verbindung zwischen den jeweiligen Komponenten sicherzustellen. So weisen Kunststoffe häufig derart unterschiedliche Verarbeitungstemperaturen sowie Verarbeitungsschwindungen auf, dass eine Vernetzung zwischen den Kunststoffen während des Herstellungsprozesses nicht oder kaum auftreten kann; durch Schwindung kann sich ein Trennspalt zwischen den Komponenten ergeben. Um diesem Effekt entgegenzuwirken und um dennoch eine gute Verbindung sicherzustellen, können die jeweiligen Komponenten mittels Formschlussmitteln miteinander verbunden werden. Ein Gleitführungsschuh, bei dem das Führungsschuhgehäuse, das Gleitelement und gegebenenfalls das Dämpfelement formschlüssig miteinander verbunden sind, ergeben ein kompaktes und stabiles mehrstückiges Verbund-Bauteil.

Das Führungsschuhgehäuse, das Gleitelement und gegebenenfalls das Dämpfelement können jeweils Formschlussmittel aufweisen, die zur formschlüssigen Verbindung von Führungsschuhgehäuse und Gleitelement bzw. von Führungsschuhgehäuse und Dämpfelement einerseits und Dämpfelement und Gleitelement andererseits in komplementäre Formschlussmittel eingreifend aufgenommen sind.

Bevorzugt ist das Führungsschuhgehäuse dabei wenigstens in Bezug auf die Schnittstelle zum Gleitelement oder (sofern vorhanden) zum Dämpfelement ein monolithisch aus demselben Material bestehendes Element. Demnach wären auch die dem Führungsschuhgehäuse zugeordneten Formschlussmittel am Führungsschuhgehäuse angeformt und monolihisch mit diesem verbunden. An diesem einstückigen Führungsschuhgehäuse könnten separate Teile wie etwa Anschlusselemente zum Ölen der Führungsschiene angebracht sein.

Ein sicherer Formschluss kann sich ergeben, wenn das Führungsschuhgehäuse zur randseitigen Sicherung eine umlaufende Schulterkontur umfasst, in der das Gleitelement oder gegebenenfalls das Dämpfelement eingefasst ist.

Zusätzlich oder alternativ kann das Gleitelement einen umlaufenden Formschluss-Kragen umfasst, der in einer Formschluss-Nut des Gleitelements oder gegebenenfalls in einer Formschluss-Nut des Dämpfelements eingreift. Ein äusserer Rand der Formschluss-Nut kann dabei die vorerwähnte umlaufende Schulterkontur bilden, in der das Gleitelement oder gegebenenfalls das Dämpfelement eingefasst ist.

Ein weiterer Aspekt der Erfindung betrifft ein Verfahren zur Herstellung des vorgängig beschriebenen Gleitführungsschuh nach Anspruch 6.

Der Gleitführungsschuh umfasst wenigstens zwei Komponenten, nämlich ein Führungsschuhgehäuse und ein Gleitelement zum Führen einer Aufzugskabine oder eines Gegengewichts entlang einer Führungsschiene. Der Gleitführungsschuh kann aber auch noch eine dritte Komponente umfassen, nämlich ein zwischen Führungsschuhgehäuse und Gleitelement angeordnetes Dämpfelement. Das erfindungsgemässe Verfahren zeichnet sich dadurch aus, dass zum Bilden eines Verbund-Bauteils eine der Komponenten in einem Urformprozess auf der anderen Komponente erzeugt wird, wobei das Führungsschuhgehäuse eine der am Urformprozess beteiligten Komponenten ist. Die zweite Komponente kann somit auf der ersten Komponente in einem Urformprozess erzeugt werden. Auf diese Weise können die beiden Komponenten ohne Montagetätigkeit (direkt oder indirekt) miteinander verbunden werden. Urformprozesse können zum Beispiel Spritzgiessen oder Pressformen (z.B. Formpressen, Fliesspressen, Spritzpressen) sein. Insbesondere für Kleinserien oder zur Herstellung von Spezialanfertigungen für das Führungsschuhgehäuse ist auch vorstellbar, eine der Komponenten mittels additiver Fertigung auf der anderen Komponente zu erzeugen. Die additive Fertigung kann ohne Werkzeug erfolgen. Für die additive Fertigung des Gleitführungsschuhs können 3D-Drucktechnologien wie etwa Schmelzschichtverfahren, Stereolithografie, Digital Light Processing, Lasersintern, Laserschmelzen oder Multi Jet Fusion-Technologie eingesetzt werden. Besonders vorteilhaft kann es sein, wenn jede der zusätzlichen Komponenten jeweils in einem Urformprozess auf der oder den anderen Komponenten erzeugt wird. Wenn das Führungsschuhgehäuse beispielsweise in einem Spritzgussverfahren angefertigt wurde, kann ein Dämpfelement durch ein Spritzgussverfahren an das Führungsschuhgehäuse angespritzt werden. Danach kann das Gleitelement ebenfalls durch ein Spritzgussverfahren an einen Rohling umfassend Führungsschuhgehäuse und Dämpfelement angespritzt werden. Der so hergestellte Gleitführungsschuh wurde somit mittels eines 3K-Spritzgussverfahrens hergestellt. Für einfachere Gleitführungsschuhe, also Gleitführungsschuhe nur mit Führungsschuhgehäuse und Gleitelement bzw. Gleitführungsschuhe ohne Dämpfelement, kann das Gleitelement direkt durch ein Spritzgussverfahren an das Führungsschuhgehäuse angespritzt werden. Der letztgenannte Gleitführungsschuh wird somit mittels 2K-Spritzgussverfahren hergestellt. Wenn das Führungsschuhgehäuse ein vorfabriziertes Bauteil aus Metall, beispielsweise Stahl oder einem Metallgussteil, ist, kann es ebenfalls vorteilhaft sein, wenn die weiteren Komponenten, also das Gleitelement und gegebenenfalls das Dämpfelement wie vorgängig beschrieben, durch Spritzgussverfahren an das Führungsschuhgehäuse angespritzt werden.

Beim vorerwähnten Verfahren wird der Gleitführungsschuh von aussen nach innen hergestellt. Ausgehend von der äussersten Komponente, dem Führungsschuhgehäuse, wird eine innere Komponente, das Gleitelement oder das Dämpfelement, erzeugt. Das Verfahren lässt sich aber auch in umgekehrter Richtung durchführen. Ausgangspunkt bildet hier die innerste Komponente, das Gleitelement. An das zuerst fabrizierte Gleitelement wird eine äussere Komponente, das Führungsschuhgehäuse oder das Dämpfelement, erzeugt. Das alternative Herstellverfahren umfasst demnach folgende Schritte: Das Gleitelement wird insbesondere durch ein Spritzgussverfahren angefertigt, danach wird das Dämpfelement durch ein Spritzgussverfahren an das Gleitelement angespritzt und schliesslich wird das Führungsschuhgehäuse durch ein Spritzgussverfahren an einen Rohling umfassend Gleitelement und Dämpfelement angespritzt. Der so hergestellte Gleitführungsschuh wurde somit mittels eines 3K-Spritzgussverfahrens hergestellt. Für den mittels 2K-Spritzgussverfahren hergestellten Gleitführungsschuh wird nach Anfertigen des Gleitelement das Führungsschuhgehäuse direkt durch ein Spritzgussverfahren an das Gleitelement angespritzt.

Ein bevorzugtes Ausführungsform des ersten Aspekts der Erfindung betrifft sodann einen Gleitführungsschuh gemäss vorgängiger Beschreibung, wobei der Gleitführungsschuh mit einem Verfahren umfassend die folgende Schritte erhältlich ist: Bereitstellen einer Form zur Herstellung eines Führungsschuhgehäuses, Einspritzen eines ersten Kunststoffs in die Form zur Herstellung des Führungsschuhgehäuses, und Herstellen eines Verbund-Bauteils durch Anspritzen eines zweiten Kunststoffs an das Führungsschuhgehäuse, wobei der zweite Kunststoff zum Bilden eines Gleitelements oder eines Dämpfelement vorgesehen ist. Das Anspritzen des zweiten Kunststoffs kann erfolgen, wenn der Rohling für das Führungsschuhgehäuse noch heiss ist. Es wäre aber auch denkbar, dass der Rohling schon abgekühlt oder allenfalls noch warm ist und erst dann das Anspritzen des zweiten Kunststoffs durchgeführt wird. Für eine feste Verbindung können allenfalls chemische Haftmittel verwendet werden, die an den abgekühlten Rohling aufgebracht werden.

Der erste Kunststoff kann dabei ein hochfester Kunststoff sein, ausgewählt beispielsweise aus der Gruppe der PE, PP, PA, PS, PES, PUR, POM, PEEK oder TPEs sein. Besonders bevorzugt wird dabei ein faserverstärkter Kunststoff verwendet, wodurch ein Führungsschuhgehäuse mit einer besonders hohen Steifigkeit und Festigkeit und Dimensionsstabilität geschaffen werden kann. Der zweite Kunststoff kann ein steifer Kunststoff (z.B. POM oder UHMW-PE) mit einem geringen Reibungskoeffizienten sein, welcher ein Gleitelement zum Führen einer Aufzugskabine entlang einer Führungsschiene bildet.

Der zweite Kunststoff kann aber auch ein vergleichsweise elastischer Kunststoff wie etwa TPE sein, welcher ein Dämpfelement für den Gleitführungsschuh bildet. An diesem zweiten Kunststoff wird ein dritter Kunststoff angespritzt, wodurch ein Gleitführungsschuh mit Führungsschuhgehäuse, Dämpfelement und Gleitelement, also ein aus drei Komponenten bestehender bzw. aufgebauter Gleitführungsschuh erhältlich ist. Der dritte Kunststoff, der zum Bilden des Gleitelements vorgesehen ist, kann folglich der schon erwähnte steife Kunststoff (z.B. POM oder UHMW-PE) mit einem geringen Reibungskoeffizienten sein.

Alternativ ist der Gleitführungsschuh auch mit einem Verfahren umfassend die folgenden Schritte erhältlich: Bereitstellen einer Form zur Herstellung eines Gleitelements, Einspritzen eines ersten Kunststoffes in die Form zur Herstellung des Gleitelements, Herstellen eines Verbund-Bauteils durch Anspritzen eines zweiten Kunststoffes an das Gleitelement. Der erste Kunststoff wäre bei dieser Variante ein steifer Kunststoff (z.B. POM oder UHMW-PE) mit einem geringen Reibungskoeffizienten. Zum Schaffen eines Zwei-Komponenten-Führungsschuhs kann der zweite Kunststoff der hochfeste Kunststoff sein, wobei besonders bevorzugt wird dabei ein faserverstärkter Kunststoff verwendet, wodurch ein Führungsschuhgehäuse mit hoher Steifigkeit, Festigkeit und Dimensionsstabilität geschaffen werden kann. Für einen drei Komponenten umfassenden Führungsschuh wird als zweiter Kunststoff ein vergleichsweise elastischer Kunststoff wie etwa TPE verwendet, welcher zweite Kunststoff das Dämpfelement für den Gleitführungsschuh bildet. An den zweiten Kunststoff wird schliesslich der dritte Kunststoff zum Bilden des Gleitelements angespritzt.

Der Gleitführungsschuh ist alternativ mit einem Verfahren erhältlich ist, das sich vom vorgängig beschriebenen Verfahren lediglich durch eine andere Reihenfolge der Erzeugung der einzelnen Komponenten unterscheidet. Dieser Gleitführungsschuh ist demnach mit einem Verfahren umfassend die folgenden Schritte erhältlich: Bereitstellen einer Form zur Herstellung des Gleitelements, Einspritzen eines ersten Kunststoffes in die Form zur Herstellung des Gleitelements, Herstellen eines Verbund-Bauteils durch Anspritzen eines zweiten Kunststoffes an das Gleitelement zum Bilden entweder des Führungsschuhgehäuses oder des Dämpfelements. Im letztgenannten Fall, also wenn das Dämpfelement durch Anspritzen des zweiten Kunststoffs an das Gleitelement gebildet wurde, ergibt sich ein Herstellen eines aus drei Komponenten bestehenden Verbund-Bauteils durch Anspritzen eines dritten Kunststoffes zum Bilden des Führungsschuhgehäuses an das Dämpfelement.

Weitere Vorteile und Einzelmerkmale ergeben sich aus der nachfolgenden Beschreibung von Ausführungsbeispielen und aus den Zeichnungen. Es zeigen:
- Fig. 1: eine vereinfachte Darstellung eines Aufzugs mit einer über erfindungsgemässe Gleitführungsschuhe an Führungsschienen geführten Aufzugskabine in einer Draufsicht,
- Fig. 2: eine Schnittdarstellung durch einen erfindungsgemässen zwei Komponenten umfassenden Gleitführungsschuh,
- Fig. 3: eine Variante des Gleitführungsschuhs gemäss Fig. 2 in einer Schnittdarstellung, wobei der Gleitführungsschuh drei Komponenten umfasst,
- Fig. 4: eine perspektivische Ansicht auf einen erfindungsgemässen drei Komponenten umfassenden Gleitführungsschuh,
- Fig. 5: ein erfindungsgemässes Verfahren zur Herstellung eines Gleitführungsschuhs in einer stark vereinfachten Darstellung und in einer Schnittansicht
- Fig. 6: ein alternativer Gleitführungsschuh zum Ausführungsbeispiel gemäss Fig. 3,
- Fig. 7: eine Schnittdarstellung eines weiteren Ausführungsbeispiels für einen Gleitführungsschuh,
- Fig. 8: eine Schnittdarstellung eines Ausführungsbeispiels für einen Gleitführungsschuh mit formschlüssiger Verbindung zwischen Gleitelement und Führungsschuhgehäuse,
- Fig. 9: eine perspektivische Darstellung mit Teilschnitten eines zwei Komponenten umfassenden Gleitführungsschuhs mit Halbschnitten,
- Fig. 10: eine perspektivische Darstellung des Gleitelements für den Gleitführungsschuh aus Fig. 9, und
- Fig. 11: eine Variante des Gleitführungsschuhs gemäss Fig. 9, wobei der Gleitführungsschuh drei Komponenten umfasst.

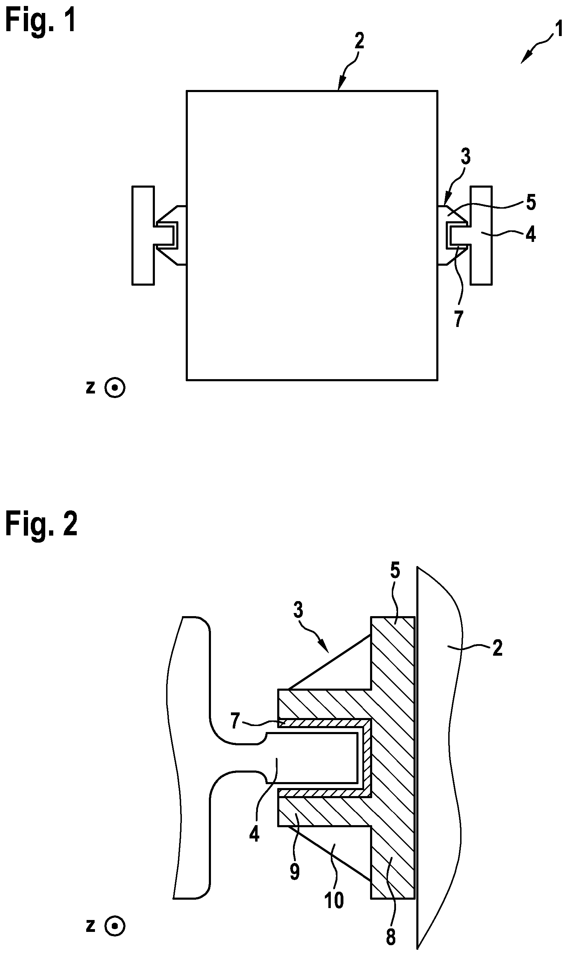

Fig. 1 zeigt einen insgesamt mit 1 bezeichneten Aufzug mit einer Aufzugskabine 2, die zwischen zwei Führungsschienen 4 vertikal geführt in einem nicht gezeigten Aufzugsschacht auf und ab in z-Richtung bewegbar ist. Die Linearführung mit der Führungsschiene 4 ist vorliegend beispielhaft durch ein sich in Längsrichtung z erstreckendes T-Profil gebildet. An der Kabine 2 ist auf jeder Seite wenigstens ein Gleitführungsschuh 3 zum Führen der Kabine 2 angeordnet. Für eine optimale Führung weisen Aufzugskabinen in der Regel vier (zwei je Seite) oder mehr Gleitführungsschuhe auf. Ebenso kann ein (nicht gezeigtes) Gegengewicht, das über Tragmittel in Form von Seilen oder Riemen mit der Kabine verbunden ist, über gleichartig ausgebildete (hier nicht dargestellte) Gleitführungsschuhe zum Führen des Gegengewichts an Gegengewichtsführungsschienen aufweisen.

Der Gleitführungsschuh 3 besteht im Wesentlichen in an sich bekannter Weise aus folgenden zwei Komponenten: einem Führungsschuhgehäuse 5 und einem Gleitelement 7. Das Führungsschuhgehäuse 5 dient einerseits zum Halten des Gleitelements 7 und andererseits zum Verbinden an die Aufzugskabine. Das Führungsschuhgehäuse 5 kann dabei, wie in Fig. 1 gezeigt, direkt mit der Kabine 2 verbunden sein oder an einer (nicht dargestellten) Konsole angebracht sein, wobei die Konsole ein Verbindungselement zur Kabine bildet. Das Gleitelement 7 ist in einer kanalartigen Aufnahme im Führungsschuhgehäuse 5 angeordnet. Das Gleitelement 7 besteht aus einem Material und/oder der Führungsschiene 4 zugewandten Oberflächen mit guten Gleiteigenschaften, so dass eine gute und verschleissarme Führung der Kabine 2 an den Führungsschienen 4 ermöglicht wird. Das Gleitelement 7 weist vorliegend ersichtlicherweise eine U-förmige Form auf.

Eine Besonderheit des erfindungsgemässen Gleitführungsschuhs 3 besteht darin, dass das Führungsschuhgehäuse 5 und das Gleitelement 7 zusammen ein einstückiges Verbund-Bauteil bilden. Führungsschuhgehäuse 5 und Gleitelement 7 sind damit unverlierbar miteinander verbunden. Auf diese Weise ergibt sich ein vorteilhafter kompakter Gleitführungsschuh, der als Einweg- oder Wegwerf-Bauteil einsetzbar ist. Da ein derartiger Gleitführungsschuh 3 einfach und kostengünstig herstellbar ist, kann der Gleitführungsschuh als Ganzes nach Erreichen von seiner Lebensdauer entsorgt und durch einen neuen Gleitführungsschuh ersetzt werden.

Fig. 2 zeigt einen zwei Komponenten umfassenden Gleitführungsschuh 3 in einer vergrösserten Darstellung. Das Führungsschuhgehäuse 5 weist einen Basisabschnitt 8 auf, der direkt oder indirekt an der Kabine 2 befestigt ist. Das Führungsschuhgehäuse 5 weist weiter zwei rechtwinklig vom Basisabschnitt 8 weg ragende Stützabschnitte 9 auf. Die Stützabschnitte 9 definieren eine kanalartige Aufnahme, in der das U-förmige Gleitelement angeordnet ist. Zur Versteifung sind Rippen 10 vorgesehen, die jeweils die Stützabschnitte 9 zum Basisabschnitt 8 hin abstützen. Das Gleitelement 7 ist stoffschlüssig mit dem Führungsschuhgehäuse 5 verbunden und bildet so mit diesem einen gemeinsamen Formkörper.

Besonders vorteilhaft ist es, wenn der Gleitführungsschuh 3 in einem 2K-Spritzgussverfahren hergestellt wird. Das Führungsschuhgehäuse 5 kann ein Spritzgussteil aus einem ersten Kunststoff sein, an das ein zweiter Kunststoff zum Herstellen des Gleitelements 7 angespritzt wird. Es ist allerdings auch denkbar, ein metallisches Führungsschuhgehäuse 5 vorzusehen, an das durch ein Spritzgussverfahren ein Kunststoff zum Erstellen des Gleitelements 7 angespritzt wird.

Das Führungsschuhgehäuse 5 kann aus einem hochfesten Kunststoff, beispielsweise ein Thermoplast, bestehen. Dieser Kunststoff kann einfach spritzgeformt werden. Der Kunststoff kann zum Beispiel PE, PP, PA, PS, PES, PUR, POM, PEEK oder TPE sein. Für ein stabiles, steifes Gehäuse wird besonders bevorzugt ein faserverstärkter, beispielsweise ein glasfaserverstärkter Kunststoff für das Führungsschuhgehäuse 5 verwendet. Zum Beispiel kann das Führungsschuhgehäuse 5 aus faserverstärkten POM bestehen, eine hohe Steifigkeit, Festigkeit und Härte ist sichergestellt und das Führungsschuhgehäuse zeichnet sich weiter durch gute Dimensionsstabilität und grosse mechanische und chemische Stabilität aus.

Das Gleitelement 7 ist ebenfalls aus einem spritzgiessbaren Kunststoffmaterial gefertigt, wobei der Kunststoff für das Gleitelement 7 sich im Hinblick auf die Gleitfunktion durch einen geringen Reibungskoeffizienten auszeichnen soll. POM oder UHMW-PE beispielsweise erfüllen diese Anforderungen. Das Gleitelement 7 könnte selbstverständlich auch aus anderen geeigneten Materialien gefertigt sein.

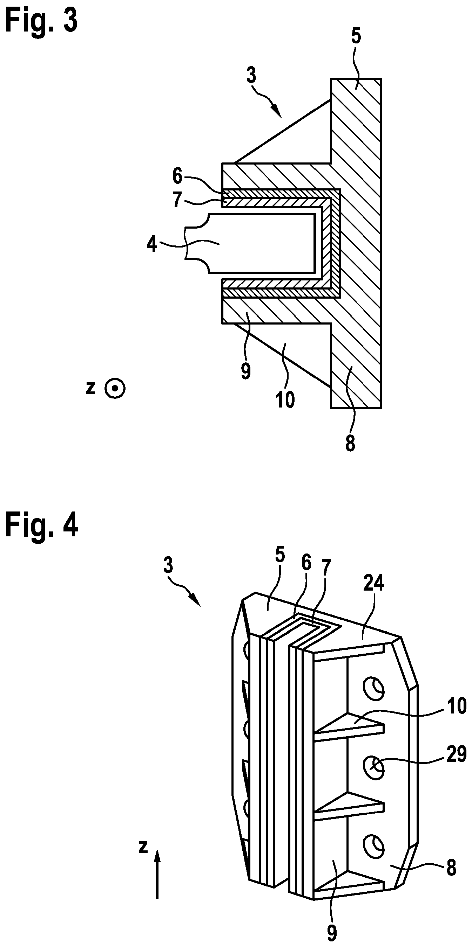

Fig. 3 zeigt eine Variante eines Gleitführungsschuhs 3, bei dem zusätzlich ein Dämpfelement 6 vorgesehen ist. Das zwischen Gleitelement 7 und Führungsschuhgehäuse 5 angeordnete Dämpfelement 5 hat die Funktion, allenfalls auftretende Geräusche und Vibrationen während der Kabinenfahrt zu dämpfen. Bevorzugt ist der Gleitführungsschuh 5 ein komplett aus Kunststoffmaterialien bestehendes Verbund-Bauteil. Das Dämpfelement 6 kann beispielsweise aus SBR, TUR, EPDM, NBR, NR gefertigt sein. In herstellungstechnischer Hinsicht ist es vorteilhaft, wenn für das Dämpfelement 6 ein elastischer, spritzgussfähiger Kunststoff, beispielsweise ein thermoplastisches Elastomer (TPE) verwendet wird.

Die drei wesentlichen Komponenten des Gleitführungsschuhs 3, also das Führungsschuhgehäuse 5, das Dämpfelement 6 und das Gleitelement 7 sind in Abhängigkeit von der vorgesehenen Funktion der jeweiligen Komponente aus unterschiedlichen Kunststoffen gefertigt und stoffschlüssig miteinander verbunden. Ein solcher Gleitführungsschuh 3 lässt sich in einem 3K-Spritzgussverfahren herstellen.

Fig. 4 zeigt einen Gleitführungsschuh 3 in einer perspektivischen Darstellung, aus welcher einige konstruktive Details entnehmbar sind. Zum Beispiel ist in Fig. 4 ersichtlich, dass das Führungsschuhgehäuse Öffnungen 29 für die Befestigung an eine Konsole oder direkt an die Kabine aufweist. Auf jeder Seite sind beispielhaft drei Öffnungen 29 im Basisabschnitt 8 angeordnet, durch die Befestigungsschrauben durchführbar sind, mit welchen das Führungsschuhgehäuse an die Kabine anschraubbar ist.

Für einen sicheren und einwandfreien Betrieb des Aufzugs kann es notwendig sein, die Führungsschienen mit Öl oder einem anderen Schmiermittel zu benetzen. Die Führungsschienen werden mit einem leichten Ölfilm überzogen, sobald die Kabine fährt. Hierzu kann ein (nicht dargestellter) Schmierungsaufsatz verwendet werden, der an das Führungsschuhgehäuse 5 im Bereich der mit 24 bezeichneten Längsseite optional anbringbar ist. Anstelle eines Schmierungsaufsatzes wären aber auch andere Anschlusselemente denkbar.

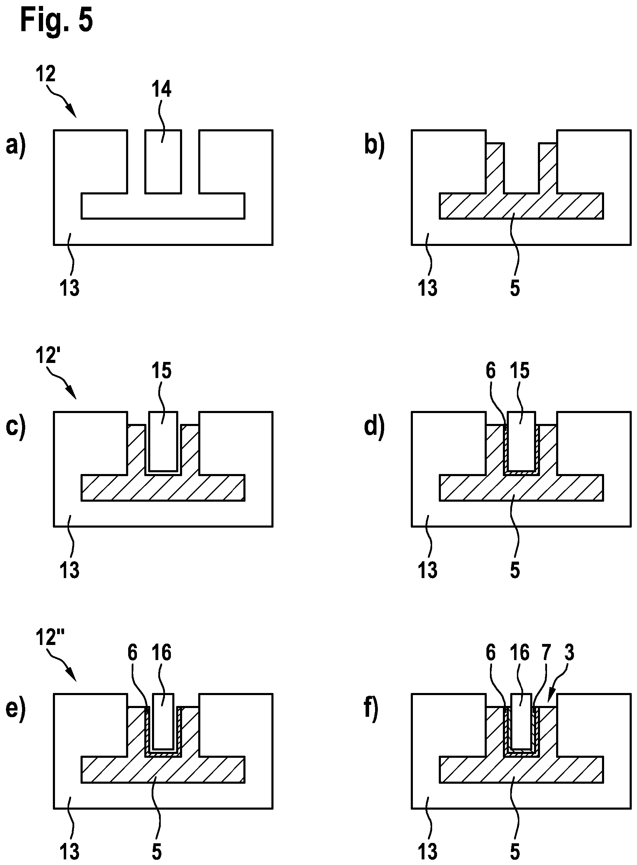

Ein Verfahrensablauf zum Herstellen eines erfindungsgemässen Gleitführungsschuhs ist in den Figuren 5 a - f dargestellt. In einem ersten Schritt wird das Führungsschuhgehäuse angefertigt. Dazu wird eine Form 12 bereitgestellt (Fig. 5a). Die Form 12 umfasst eine Matrize 13 und einen Kern 14. Die Matrize definiert die Aussenkontur des Führungsschuhgehäuses und kann zum einfachen Entnehmen des fertigen Spritzgussteils mehrteilig ausgestaltet sein. Der Kern 14 definiert eine kanalartige Aufnahme im Führungsschuhgehäuses. Nun wird Kunststoff in flüssiger Form in die Form 12 eingespritzt und so das Führungsschuhgehäuse 5 hergestellt (Fig. 5b). Der Kern 14 wird danach wieder aus der Matrize 13 entfernt und ein Kern 14 mit schmaleren Abmessungen in die Matrize 13 zum Erstellen der Form 12' eingeführt (Fig. 5c). Zum Bilden des einstückigen Verbund-Bauteils für den Gleitführungsschuh kann nun eine zweite Komponente, die schon das Gleitelement oder das Dämpfelement sein kann, an das Führungsschuhgehäuse 5 angeformt werden. Hierzu wird ein zweiter Kunststoff in die Form 12' eingespritzt. Der zweite Kunststoff verbindet sich mit dem ersten Kunststoff, wodurch ein aus zwei Komponenten aufgebauter Formkörper bestehend aus Führungsschuhgehäuse 5 und Dämpfelement 6 entsteht (Fig. 5d). Der zweite Kunststoff wird bei diesem Verfahrensschritt an das Führungsschuhgehäuse 5 angespritzt. Das Anspritzen erfolgt vorzugsweise, wenn der Rohling für das Führungsschuhgehäuse noch heiss ist. Es ist allerdings auch vorstellbar, den zweiten Kunststoff erst nach einem teilweisen oder vollständigen Erkalten des Rohlings anzuspritzen. Unter Umständen könnten Haftmittel zusätzlich verwendet werden. Danach kann die dritte Komponente eingebracht werden. Hierzu wird zunächst der Kern 15 aus der Matrize 13 entfernt und ein wiederum schmalerer Kern 16 in die Matrize 13 zum Erstellen der Form 12" eingeführt (Fig. 5e). Dieser Kern 16 ist unter Berücksichtigung des Schwindungsverhaltens des verwendeten Kunststoffmaterials und des gewünschten Spiels im Wesentlichen an die (hier nicht dargestellten) Führungsschiene angepasst. Es wird ein dritter Kunststoff in die Form 12" mit Matrize 13 und Kern 16 eingespritzt. Der dritte Kunststoff wird zum Herstellen des Gleitelements 7 bei diesem Verfahrensschritt an das Dämpfelement 6 angespritzt. Der dritte Kunststoff verbindet sich mit dem zweiten Kunststoff, wodurch schliesslich ein aus drei Komponenten aufgebauter Formkörper bestehend aus Führungsschuhgehäuse 5, Dämpfelement 6 und Gleitelement 7 entsteht (Fig. 5f). Das Anspritzen erfolgt vorzugsweise, wenn das Dämpfelement 7 noch heiss ist. Es ist allerdings auch vorstellbar, den dritten Kunststoff erst nach einem teilweisen oder vollständigen Erkalten des Kunststoffmaterials für das Dämpfelement 7 anzuspritzen. Unter Umständen könnten auch hier Haftmittel verwendet werden.

Das vorgängig beschriebene Verfahren ist unter der Bezeichnung 3K-Spritzgussverfahren bekannt. Der so hergestellte Gleitführungsschuh 3 ist ein komplett aus Kunststoffmaterialien bestehendes Verbund-Bauteil, bei dem das Führungsschuhgehäuse 5, das Gleitelement 6 und das Dämpfelement 7 stoffschlüssig miteinander verbunden sind, wodurch ein kompakter günstiger Einweg-Gleitführungsschuh geschaffen wird, der ohne Montagetätigkeit gefertigt werden kann. Da keine separaten Elemente manuell oder maschinell zusammengesetzt werden müssen, können Gleitführungsschuhe in grossen Stückzahlen einfach und effizient hergestellt werden. Für den nur aus zwei Komponenten aufgebauten Gleitführungsschuh ist das beschriebene Verfahren verkürzt; schon nach Beendigung des Schrittes gemäss Fig. 5d ist der Zwei-Komponenten- Gleitführungsschuh fertiggestellt, wobei hier als zweiter Kunststoff ein geeigneter Kunststoff zum Bilden des Gleitelements gewählt wird. Der Kern 15 der Form wäre in diesem Fall an die Führungsschiene angepasst (vgl. Fig. 5c).

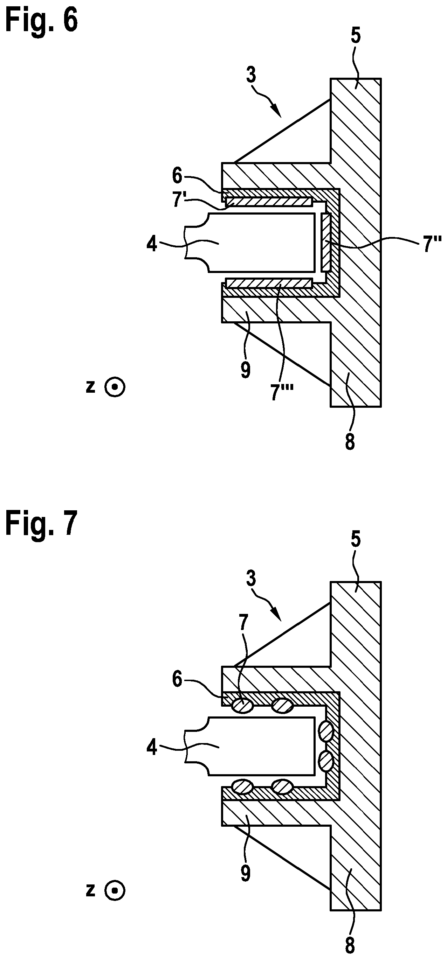

Je nach verwendeten Materialien für die jeweiligen Komponenten (Gleitelement 7, Dämpfelement 6, Führungsschuhgehäuse 5) ist eine stoffschlüssige Verbindung der Komponenten nicht oder nicht ausreichend möglich. Durch Schwindung können Trennspalte zwischen den Komponenten entstehen. Für eine sichere Verbindung der Komponenten untereinander sind daher Formschlussmittel vorzusehen, wodurch Führungsschuhgehäuse 5, das Gleitelement 7 und Dämpfelement 6 formschlüssig miteinander verbunden sind. Durch Anpassen der Form der Komponenten kann ein solcher Formschluss erzielt werden. Hierzu wird auf die nachfolgenden Figuren 6 bis 11 verwiesen.

Beim in den Figuren 5 dargestellten Verfahrensablauf zum Herstellen des Gleitführungsschuhs werden die Komponenten von aussen nach innen erzeugt. Ein alternatives Verfahren zum Herstellen eines erfindungsgemässen Gleitführungsschuhs kann der Verfahrensablauf gemäss Fig. 5a-f in analoger jedoch umgekehrter Weise erfolgen. In diesem Fall würde also zuerst das Gleitelement 7 durch ein Spritzgussverfahren angefertigt, danach das Dämpfelement 6 durch ein Spritzgussverfahren an das Gleitelement 7 angespritzt und schliesslich das Führungsschuhgehäuse 5 durch ein Spritzgussverfahren an den Rohling umfassend Gleitelement 7 und Dämpfelement 6 angespritzt.

Wie aus den Fig. 6 und 7 ersichtlich ist, muss das Gleitelement 7 nicht unbedingt eine U-Profilform aufweisen. Wie etwa Fig. 6 zeigt, könnte das Gleitelement 7 mehrteilig ausgestaltet sein und aus drei flächigen Teilelementen 7', 7" und 7‴ bestehen. Auch solche Teilelemente 7', 7" und 7‴ lassen sich durch ein Spritzgussverfahren einfach herstellen und mit dem Rest des Gleitführungsschuhs verbinden. Durch das Anspritzen an den vorzugsweise noch heissen Rohling kann sichergestellt werden, dass auch diese Einzelelemente 7 stoffschlüssig und damit unverlierbar mit dem Dämpfelement 6 verbunden sind.

Dank dem 2K- oder 3K-Spritzverfahren sind auch kompliziertere Formgebungen möglich. Beispielsweise kann, wie etwa Fig. 7 zeigt, das Gleitelement 7 aus einer Vielzahl von Teilelementen zusammengesetzt sein, die jeweils wenigstens abschnittsweise einen im Querschnitt gekrümmten Verlauf aufweisen.

Das Führungsschuhgehäuse 5 könnte anstelle der beispielhaft gezeigten Formgebung mit plattenartigem Basisabschnitt 8 und den zwei rechtwinklig vom Basisabschnitt 8 weg ragenden Wänden, die die Stützabschnitte 9 bilden, andere Formgebungen aufweisen. Durch Anpassen der Form wäre es auch denkbar, auf die Rippen 10 zu verzichten. Weiter ist es insbesondere für kurze Führungsschuhgehäuse denkbar, je Seite nur jeweils eine Öffnungen 29 für eine Befestigungsschraube vorzusehen. Denkbar wäre sodann, das Führungsschuhgehäuse 5 als Hohlkörper auszugestalten. Der Hohlraum des Hohlkörpers könnte zur Aufnahme von Öl zur Schmierung der Führungsschienen verwendet werden.

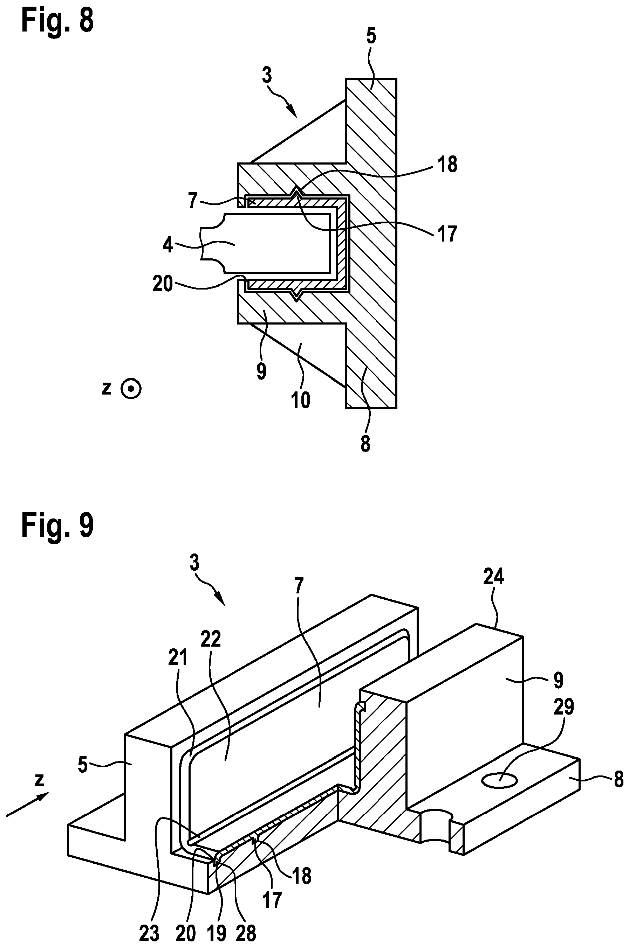

Fig. 8 zeigt einen Zwei-Komponenten-Gleitführungsschuh 3, bei dem das Gleitelement 7 formschlüssig im Führungsschuhgehäuse 5 aufgenommen und gesichert ist. Für die formschlüssige Verbindung weist das Gleitelement 7 im Bereich der Unterseite eine in Längsrichtung z verlaufende Rippe 17 mit einer im Querschnitt dreieckigen Rippenform auf, welche in eine komplementäre Nut 18 im Führungsschuhgehäuse 5 eingreift. Weiter ist das Gleitelement 7 durch eine Schulterkontur 20 randseitig gesichert. Selbstverständlich wären aber auch andere als die hier gezeigten Formschlussmittel denkbar. Zum Beispiel könnten statt der länglich ausgebildeten Rippen 17 und Nuten 18 auch punktuell in der Schnittstelle zwischen Gleitelement 7 und Führungsschuhgehäuse 5 vorgesehene Formschlussmittel vorgesehen werden. Formschlussmittel könnten etwa zapfenartige Vorsprünge sein, die in komplementäre Aussparungen eingreifend aufgenommen sind.

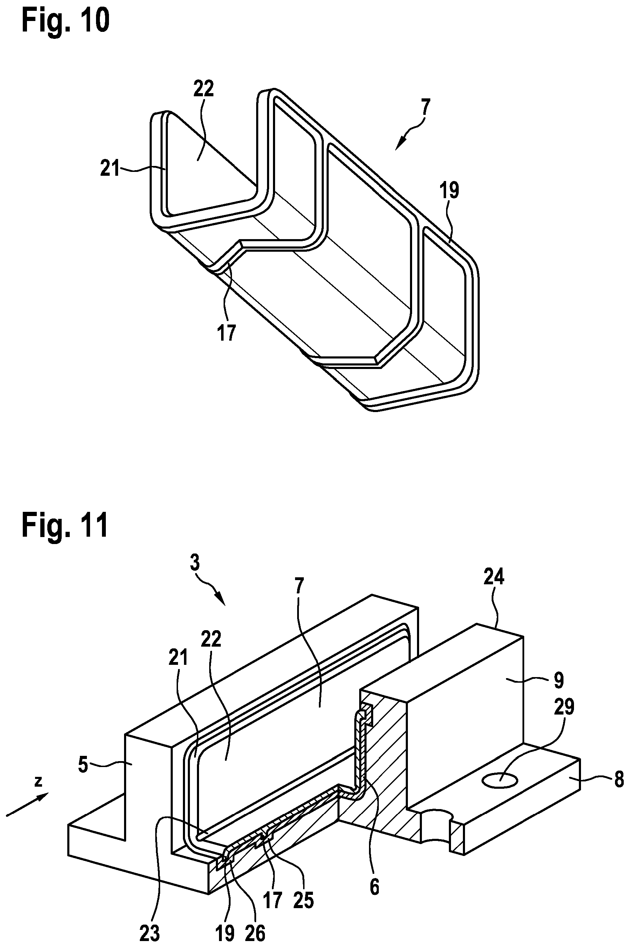

Im Ausführungsbeispiel gemäss Fig. 9 weist der Gleitführungsschuh 3 ein Gleitelement 7 mit einen umlaufenden Formschluss-Kragen 19 auf, wobei der Formschluss-Kragen 19 in einer Formschluss-Nut 28 des Führungsschuhgehäuses 5 eingreift. Der äussere Rand der Nut 28 bildet eine umlaufende Schulterkontur 20 im Führungsschuhgehäuse 5, mit welcher zur randseitigen Sicherung das Gleitelement eingefasst ist. Der umlaufende Formschluss-Kragen 19 ist besonders gut auch in Fig. 10 erkennbar. Wie aus Fig. 9 sowie Fig. 10 hervorgeht, umfasst das Gleitelement 7 quer zur Längsichtung z verlaufende Formschluss-Rippen 17. Diese Formschluss-Rippen 17 sind in komplementäre Nuten im Führungsschuhgehäuse 5 aufgenommen. Weiter ist erkennbar, dass das Gleitelement 7 einen durch eine Anphasung oder Abrundung geschaffenen Einlaufbereich 21 aufweist, welcher Vorteile hinsichtlich Fahrkomfort und bei allfälliger Schmierung bietet. Weiter zeigt Fig. 9 die dem Gleitelement 7 zugeordneten Gleitflächen 22, die, wenn der Gleitführungsschuh 3 im Aufzug installiert und einsatzbereit ist, bei einer Kabinenfahrt mit geringem Spiel entlang der Führungsschiene gleiten. Die Gleitflächen 22 sind ersichtlicherweise vorliegend plan ausgestaltet. Sodann weist das Gleitelement 7 in den Eckbereichen zwischen den rechtwinklig zueinander stehenden Gleitflächen 22 in Längsrichtung z sich erstreckende Hinterschneidungen 23 auf.

Fig. 11 zeigt einen Drei-Komponenten-Gleitführungsschuh 3, also einen Gleitführungsschuh 3 mit Führungsschuhgehäuse 5, Gleitelement 7 und dazwischen angeordneten Dämpfelement 6. Das Gleitelement 7 ist ähnlich wie das Gleitelement gemäss vorhergehendem Ausführungsbeispiel ausgestaltet. Hier ist das Gleitelement 7 allerdings formschlüssig mit dem Dämpfelement 6 verbunden. Das Dämpfelement 6 ist formschlüssig mit dem Führungsschuhgehäuse 5 verbunden. Dazu weist das Dämpfelement 6 einen vergleichsweise breiten umlaufenden Formschluss-Kragen 26 auf, der in einer komplementären Formschluss-Nut im Führungsschuhgehäuse 5 aufgenommen ist. Ebenfalls sind am Dämpfelement 6 Rippen 25 als weitere Formschlussmittel angeformt.

## Patentansprüche

1. Gleitführungsschuh für einen Aufzug (1) mit einem Führungsschuhgehäuse (5) und einem im Führungsschuhgehäuse (5) angeordneten Gleitelement (7) zum Führen einer Aufzugskabine (2) oder eines Gegengewichts entlang einer Führungsschiene (4), wobei das Führungsschuhgehäuse (5) und das Gleitelement (7) ein Verbund-Bauteil bilden, **dadurch gekennzeichnet, dass** der Gleitführungsschuh (3) ein durch ein 2K- oder 3K-Spritzgussverfahren hergestelltes und komplett aus Kunststoffmaterialien bestehendes Verbund-Bauteil ist, wobei das Führungsschuhgehäuse (5) und das Gleitelement (7) jeweils aus unterschiedlichen Kunststoffen gefertigt sind.

2. Gleitführungsschuh nach Anspruch 1, **dadurch gekennzeichnet, dass** der Gleitführungsschuh (3) weiter ein Dämpfelement (6) umfasst, das Dämpfelement (6) zwischen Führungsschuhgehäuse (5) und Gleitelement (7) angeordnet ist, und dass der Gleitführungsschuh ein durch ein 3K-Spritzgussverfahren hergestelltes Verbund-Bauteil ist, wobei das Führungsschuhgehäuse (5), das Gleitelement (7) und das Dämpfelement (6) jeweils aus unterschiedlichen Kunststoffen gefertigt sind.

3. Gleitführungsschuh nach Anspruch 1 oder 2, **dadurch gekennzeichnet, dass** das Führungsschuhgehäuse (5), das Gleitelement (7) und gegebenenfalls das Dämpfelement (6) kraftschlüssig, formschlüssig und/oder stoffschlüssig miteinander verbunden sind.

4. Gleitführungsschuh nach einem der Ansprüche 1 bis 3, **dadurch gekennzeichnet, dass** das Führungsschuhgehäuse (5) zur randseitigen Sicherung eine umlaufende Schulterkontur (20) umfasst, in der das Gleitelement (7) und/oder das Dämpfelement (6) eingefasst ist.

5. Gleitführungsschuh nach einem der Ansprüche 1 bis 4, **dadurch gekennzeichnet, dass** das Gleitelement (7) einen umlaufenden Formschluss-Kragen (19) umfasst, der in einer Formschluss-Nut (28) des Führungsschuhgehäuses (5) und/oder in einer Formschluss-Nut des Dämpfelements (6) eingreift.

6. Verfahren zur Herstellung eines wenigstens zwei Komponenten (5, 7) umfassenden Gleitführungsschuhs für einen Aufzug gemäss einem der Ansprüche 1 bis 5, wobei die erwähnten zwei Komponenten ein Führungsschuhgehäuse (5) und ein Gleitelement (7) zum Führen einer Aufzugskabine oder eines Gegengewichts entlang einer Führungsschiene sind und wobei der Gleitführungsschuh (3) gegebenenfalls eine dritte Komponente umfasst, die ein zwischen Führungsschuhgehäuse und Gleitelement angeordnetes Dämpfelement (6) ist, wobei eine der Komponenten in einem Urformprozess auf der anderen Komponente erzeugt wird, wobei das Führungsschuhgehäuse (5) eine der am Urformprozess beteiligten Komponenten ist, wobei der Urformprozess ein Verfahrensschritt eines 2K- oder 3K-Spritzgussverfahrens ist.

7. Verfahren nach Anspruch 6, **dadurch gekennzeichnet, dass** ein Führungsschuhgehäuse (5) insbesondere durch ein Spritzgussverfahren angefertigt wird, danach ein Dämpfelement (6) durch ein Spritzgussverfahren an das Führungsschuhgehäuse (5) angespritzt wird und schliesslich ein Gleitelement (7) durch ein Spritzgussverfahren an einen Rohling umfassend Führungsschuhgehäuse (5) und Dämpfelement (6) angespritzt wird, oder dass nach Anfertigen des Führungsschuhgehäuses (5) ein Gleitelement (7) direkt durch ein Spritzgussverfahren an das Führungsschuhgehäuse (5) angespritzt wird; oder dass ein Gleitelement (7) insbesondere durch ein Spritzgussverfahren angefertigt wird, danach ein Dämpfelement (6) durch ein Spritzgussverfahren an das Gleitelement (7) angespritzt wird und schliesslich ein Führungsschuhgehäuse (5) durch ein Spritzgussverfahren an einen Rohling umfassend Gleitelement (7) und Dämpfelement (6) angespritzt wird, oder dass nach Anfertigen des Gleitelements (7) das Führungsschuhgehäuse (5) direkt durch ein Spritzgussverfahren an das Gleitelement (7) angespritzt wird.

8. Gleitführungsschuh nach einem der Ansprüche 1 bis 5, **dadurch gekennzeichnet, dass** der Gleitführungsschuh (3) mit einem Verfahren, umfassend die folgenden Schritte, erhältlich ist:
- Bereitstellen einer Form (12) zur Herstellung eines Führungsschuhgehäuses (5),
- Einspritzen eines ersten Kunststoffes in die Form zur Herstellung des Führungsschuhgehäuses (5),
- Herstellen eines Verbund-Bauteils durch Anspritzen eines zweiten Kunststoffes an das Führungsschuhgehäuse (5), wobei der zweite Kunststoff zum Bilden eines Gleitelements (7) oder eines Dämpfelement (6) vorgesehen ist, und wobei, wenn das Dämpfelement (6) durch Anspritzen des zweiten Kunststoffs an das Führungsschuhgehäuse (5) gebildet wurde, ein dritter Kunststoff an das Dämpfelement (6) zum Bilden eines Gleitelements (7) angespritzt wird; oder
- Bereitstellen einer Form zur Herstellung eines Gleitelements (7),
- Einspritzen eines ersten Kunststoffes in die Form zur Herstellung des Gleitelements (7),
- Herstellen eines Verbund-Bauteils durch Anspritzen eines zweiten Kunststoffes an das Gleitelement (7), wobei der zweite Kunststoff zum Bilden eines Führungsschuhgehäuses (5) oder eines Dämpfelement (6) vorgesehen ist, und wobei, wenn das Dämpfelement (6) durch Anspritzen des zweiten Kunststoffs an das Gleitelement (7) gebildet wurde, ein dritter Kunststoff an das Dämpfelement (6) zum Bilden eines Führungsschuhgehäuses (5) angespritzt wird.

## Claims

1. Sliding guide shoe for an elevator (1) with a guide shoe housing (5) and a sliding element (7) arranged in the guide shoe housing (5) for guiding an elevator car (2) or a counterweight along a guide rail (4), wherein the guide shoe housing (5) and the sliding element (7) form a composite component, **characterized in that** the sliding guide shoe (3) is a composite component manufactured by a 2K or 3K injection molding process and consisting entirely of plastic materials, wherein the guide shoe housing (5) and the sliding element (7) are each made of different plastics.

2. Sliding guide shoe according to claim 1, **characterized in that** the sliding guide shoe (3) further comprises a damping element (6), the damping element (6) is arranged between the guide shoe housing (5) and the sliding element (7), and that the sliding guide shoe is a composite component manufactured by a 3K injection molding process, wherein the guide shoe housing (5), the sliding element (7), and the damping element (6) are each made of different plastics .

3. Sliding guide shoe according to claim 1 or 2, **characterized in that** the guide shoe housing (5), the sliding element (7) and, if applicable, the damping element (6) are connected to each other in a force-fitting, form-fitting and/or material-fitting manner.

4. Sliding guide shoe according to one of claims 1 to 3, **characterized in that** the guide shoe housing (5) comprises a circumferential shoulder contour (20) for securing the edge, in which the sliding element (7) and/or the damping element (6) is enclosed.

5. Sliding guide shoe according to one of claims 1 to 4, **characterized in that** the sliding element (7) comprises a circumferential form-fitting collar (19), which engages in a form-fitting groove (28) of the guide shoe housing (5) and/or in a form-fitting groove of the damping element (6).

6. Method for manufacturing a sliding guide shoe (7) comprising at least two components (5, 7) for an elevator according to one of claims 1 to 5, wherein the two components mentioned are a guide shoe housing (5) and a sliding element (7) for guiding an elevator car or a counterweight along a guide rail , and wherein the sliding guide shoe (3) optionally comprises a third component, which is a damping element (6) arranged between the guide shoe housing and the sliding element, wherein one of the components is produced on the other component in a primary forming process , wherein the guide shoe housing (5) is one of the components involved in the primary forming process, wherein the primary forming process is a process step of a 2K or 3K injection molding process.

7. Method according to claim 6, **characterized in that** a guide shoe housing (5) is manufactured, in particular by an injection molding process, then a damping element (6) is injection molded onto the guide shoe housing (5), and finally a sliding element (7) is injection molded onto a blank comprising the guide shoe housing (5) and the damping element (6), or, after the guide shoe housing (5) has been manufactured, a sliding element (7) is injection molded directly onto the guide shoe housing (5) by an injection molding process, or a guide shoe housing (5) is manufactured, in particular by an injection molding process, then a damping element (6) is injection molded onto the guide shoe housing (5), and finally a sliding element (7) is injection molded onto a blank comprising the guide shoe housing (5) and the damp (5) and damping element (6), or that after the guide shoe housing (5) has been manufactured, a sliding element (7) is injection molded directly onto the guide shoe housing (5); or that
a sliding element (7) is produced, in particular by an injection molding process, then a damping element (6) is injection molded onto the sliding element (7), and finally a guide shoe housing (5) is injection molded onto a blank comprising a sliding element (7) and a damping element (6), or that, after the sliding element (7) has been manufactured, the guide shoe housing (5) is injection molded directly onto the sliding element (7) .

8. Sliding guide shoe according to one of claims 1 to 5, **characterized in that** the sliding guide shoe (3) is obtainable by a method comprising the following steps:
- providing a mold (12) for manufacturing a guide shoe housing (5),
- injecting a first plastic into the mold to produce the guide shoe housing (5),
- producing a composite component by injection molding a second plastic onto the guide shoe housing (5), wherein the second plastic material is provided for forming a sliding element (7) or a damping element (6) , and wherein, if the damping element (6) has been formed by injection molding the second plastic material onto the guide shoe housing (5), a third plastic material is injection molded onto the damping element (6) to form a sliding element (7); or
- providing a mold for manufacturing a sliding element (7),
- injecting a first plastic into the mold to produce the sliding element (7),
- producing a composite component by injection molding a second plastic onto the sliding element (7), wherein the second plastic is provided for forming a guide shoe housing (5) or a damping element (6), and wherein, when the damping element (6) has been formed by injecting the second plastic onto the sliding element (7), a third plastic is injected onto the damping element (6) to form a guide shoe housing (5).

## Revendications

1. De patin de guidage pour un ascenseur (1) comprenant un boîtier de patin de guidage (5) et un élément coulissant (7) disposé dans le boîtier de patin de guidage (5) pour guider une cabine d'ascenseur (2) ou un contrepoids le long d'un rail de guidage (4), le boîtier de patin de guidage (5) et l'élément coulissant (7) formant un composant composite, **caractérisé en ce que** le patin de guidage coulissant (3) est un élément composite fabriqué par un procédé de moulage par injection 2K ou 3K et composé entièrement de matières plastiques, le boîtier de patin de guidage (5) et l'élément coulissant (7) étant chacun fabriqués à partir de matières plastiques différentes.

2. Patine de guidage selon la revendication 1, **caractérisée en ce que** la patine de guidage (3) comprend en outre un élément amortisseur (6), l'élément amortisseur (6) étant disposé entre le boîtier de patine de guidage (5) et l'élément coulissant (7), et **en ce que** le patin de guidage est un composant composite fabriqué par un procédé de moulage par injection 3K, le boîtier du patin de guidage (5), l'élément coulissant (7) et l'élément amortisseur (6) étant chacun fabriqués à partir de matières plastiques différentes .

3. Patine de guidage selon la revendication 1 ou 2, **caractérisée en ce que** le boîtier de patine de guidage (5), l'élément coulissant (7) et, le cas échéant, l'élément amortisseur (6) sont reliés entre eux par adhérence, par complémentarité de forme et/ou par liaison matière.

4. Patine de guidage selon l'une des revendications 1 à 3, **caractérisée en ce que** le boîtier de patine de guidage (5) comprend, pour la fixation sur le bord, un contour d'épaulement périphérique (20) dans lequel l'élément coulissant (7) et/ou l'élément amortisseur (6) est encastré .

5. Patine de guidage selon l'une des revendications 1 à 4, **caractérisée en ce que** l'élément coulissant (7) comprend une collerette périphérique à engagement positif (19), qui s'engage dans une rainure à engagement positif (28) du boîtier de patine de guidage (5) et/ou dans une rainure à engagement positif de l'élément amortisseur (6) .

6. Procédé de fabrication d'un sabot de guidage coulissant (7) comprenant au moins deux composants (5, 7) pour un ascenseur selon l'une des revendications 1 à 5, les deux composants mentionnés étant un boîtier de sabot de guidage (5) et un élément coulissant (7) pour guider une cabine d'ascenseur ou un contrepoids le long d'un rail de guidage et , le patin de guidage coulissant (3) comprenant éventuellement un troisième composant qui est un élément d'amortissement (6) disposé entre le boîtier du patin de guidage et l'élément coulissant , , l'un des composants étant produit sur l'autre composant dans un processus de formage initial , le boîtier du patin de guidage (5) est l'un des composants participant au processus de moulage initial , le processus de moulage initial étant une étape d'un procédé de moulage par injection 2K ou 3K.

7. Procédé selon la revendication 6, **caractérisé en ce que**
un boîtier de patin de guidage (5) est fabriqué, en particulier par un procédé de moulage par injection, puis un élément amortisseur (6) est moulé par injection sur le boîtier de patin de guidage (5) et enfin un élément coulissant (7) est moulé par injection sur une ébauche comprenant un boîtier de patin de guidage (5) et l'élément amortisseur (6), ou qu'après la fabrication du boîtier de patin de guidage (5), un élément coulissant (7) est moulé par injection directement sur le boîtier de patin de guidage (5) ; ou qu'
un élément coulissant (7) , en particulier par un procédé de moulage par injection, puis un élément amortisseur (6) est moulé par injection sur l'élément coulissant (7) et enfin un boîtier de patin de guidage (5) est moulé par injection sur une ébauche comprenant un élément coulissant (7) et l'élément amortisseur (6), ou qu'après la fabrication de l'élément coulissant (7), le boîtier de patin de guidage (5) est moulé par injection directement sur l'élément coulissant (7) .

8. Patine de guidage selon l'une des revendications 1 à 5, **caractérisée en ce que** la patine de guidage (3) peut être obtenue par un procédé comprenant les étapes suivantes :
- la mise à disposition d'un moule (12) pour la fabrication d'un boîtier de patin de guidage (5),
- injection d'une première matière plastique dans le moule pour fabriquer le boîtier de patin de guidage (5) d' ,
- fabrication d'un composant composite par injection d'une deuxième matière plastique sur le boîtier de patin de guidage (5), la deuxième matière plastique étant prévue pour former un élément coulissant (7) ou un élément amortisseur (6) , et dans lequel, si l'élément amortisseur (6) a été formé par injection de la deuxième matière plastique sur le boîtier de patin de guidage (5), une troisième matière plastique est injectée sur l'élément amortisseur (6) pour former un élément coulissant (7) ; ou
- fournir un moule pour la fabrication d'un élément coulissant (7),
- injection d'une première matière plastique dans le moule pour fabriquer l'élément coulissant (7),
- fabriquer un composant composite en injectant une deuxième matière plastique sur l'élément coulissant (7) , le deuxième plastique étant prévu pour former un boîtier de patin de guidage (5) ou un élément amortisseur (6), et lorsque l'élément amortisseur (6) a été formé par injection du deuxième plastique sur l'élément coulissant (7), un troisième plastique est injecté sur l'élément amortisseur (6) pour former un boîtier de patin de guidage (5).
